# EUROPEAN PATENT APPLICATION

(11) **EP 3 491 977 A1**
(43) Date of publication of application: **05.06.2019**
(21) Application number: 17204292.1
(22) Date of filing: 29.11.2017
(51) Int. Cl.: A47J 31/053

(54) **CIRCULATION TYPE DUTCH COFFEE EXTRACTION DEVICE**

(71) Applicant: Witho Co., Ltd., Jeju-si Jeju-do 63309 (KR)
(72) Inventor: HONG, Kun Hwa, 63308 Jeju-si Jeju-do (KR)
(74) Representative: González López-Menchero, Álvaro Luis

(57) **Abstract**

Disclosed herein is a circulation type Dutch coffee extraction device. The device performs extractions several times by circulating coffee extracted by a coffee extraction unit, thus allowing highly concentrated Dutch coffee to be extracted at a low cost with a simple device, enabling various kinds of coffee drinks to be made using highly concentrated Dutch coffee, and thereby supplying relatively inexpensive Dutch coffee.

## Description

### BACKGROUND OF THE INVENTION

### 1. Field of the Invention

The present invention relates to a Dutch coffee extraction device. More particularly, the present invention relates to a circulation type Dutch coffee extraction device, which performs extractions several times by circulating coffee extracted by a coffee extraction unit, thus allowing highly concentrated Dutch coffee to be extracted at a low cost with a simple device, enabling various kinds of coffee drinks to be made using highly concentrated Dutch coffee, and thereby supplying relatively inexpensive Dutch coffee.

### 2. Description of the Related Art

Coffee is a popular beverage that is widely consumed all over the world. Coffee is a fragrant drink prepared by grinding coffee beans and then brewing the ground beans in hot water. As coffee consumption is expanding, consumers demand for high-quality coffee has increased. In recent years, Dutch coffee has significantly appealed to people.

Dutch coffee is extracted by supplying water of room temperature or less to ground coffee beans for three hours or more. Since Dutch coffee is extracted at low temperature, the coffee is less sour and has a unique aroma and taste. Dutch coffee retains its flavor for a longer period of time as compared to other kinds of coffee, so that this is advantageous in terms of distribution. Dutch coffee may be stored as a stock solution unlike general kinds of coffee, so that it has high marketability.

However, Dutch coffee extracted by a general Dutch coffee extraction device of the following patent document is problematic in that it takes a long time to extract the coffee and an extracted amount is small, so that the stock solution is rather expensive.

Further, Dutch coffee extracted by a general low-temperature extraction method is also problematic in that it contains low caffeine, so that this is not suitable for a consumers who prefer strong coffee or consumers who desire to have a high caffeine drink.

### [Related Art Document]

### [Patent Document]

(Patent Document 1) Korean Patent No. 10-1641879 (registered on July 18, 2016) "Clean box apparatus for extraction of Dutch coffee"

### SUMMARY OF THE INVENTION

Accordingly, the present invention has been made keeping in mind the above problems occurring in the related art, and an object of the present invention is to provide a circulation type Dutch coffee extraction device, which allows highly concentrated Dutch coffee to be extracted at a low cost with a simple device, and enables various kinds of coffee drinks to be made using the highly concentrated Dutch coffee, thus supplying relatively inexpensive Dutch coffee.

Another object of the present invention is to provide a circulation type Dutch coffee extraction device, which allows coffee grounds remaining in Dutch coffee to be dissolved.

A further object of the present invention is to provide a circulation type Dutch coffee extraction device, which is capable of improving concentration efficiency due to the uniform use of coffee grounds and the circulation of coffee.

In order to accomplish the above objects, the present invention is implemented by embodiments having the following configuration.

According to an aspect of the invention, there is provided a circulation type Dutch coffee extraction device, including a water supply unit supplying water for extracting Dutch coffee; a coffee extraction unit receiving coffee grounds, and extracting coffee using the water supplied from the water supply unit; a coffee storing unit storing the coffee extracted from the coffee extraction unit; and a coffee circulation unit circulating the extracted Dutch coffee by supplying the coffee stored in the coffee storing unit through a coffee circulation pipe to the coffee extraction unit again, whereby the device is capable of extracting highly concentrated Dutch coffee.

The coffee circulation pipe may be connected at a first end thereof to the coffee storing unit, and may be connected at a second end thereof to the water supply unit.

The water supply unit may include a water supply pipe supplying water for extracting the Dutch coffee to a portion above the coffee extraction unit, and a water supply valve provided on the water supply pipe to regulate a supply of the water through the water supply pipe, and the water supply valve may be provided in a form of a three-way valve at a point to which the coffee circulation pipe is connected.

The coffee storing unit may include a coffee storing container storing the coffee extracted by the coffee extraction unit, and a coffee rotating means rotating the coffee stored in the coffee storing container.

The coffee rotating means may include a bottom support plate forming a bottom of the coffee storing container; and a rotary plate rotatably provided on an upper portion of the bottom support plate.

The rotary plate may include a plurality of protrusions that protrude upwards while being spaced apart from each other at a predetermined interval.

The coffee circulation pipe may be connected at a first end thereof to the coffee storing unit, and may be connected at a second end thereof to a sidewall of the coffee extraction unit.

The present invention may achieve the following effects by the configuration, coupling, and use of the above and other embodiments.

As described above, the present invention provides a circulation type Dutch coffee extraction device, which performs extracting operations several times by circulating coffee extracted by a coffee extraction unit, thus allowing highly concentrated Dutch coffee to be extracted at a low cost with a simple device, enabling various kinds of coffee drinks to be made using the highly concentrated Dutch coffee, and thereby supplying relatively inexpensive Dutch coffee.

The present invention provides a circulation type Dutch coffee extraction device, which causes extracted Dutch coffee to be rotated, thus allowing coffee grounds remaining in the Dutch coffee to be dissolved.

The present invention provides a circulation type Dutch coffee extraction device, which allows circulated coffee to be supplied to a sidewall of a coffee extraction unit, thus improving concentration efficiency due to the uniform use of coffee grounds received in a coffee extraction unit and the circulation of coffee.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a view illustrating a configuration of a Dutch coffee extraction device according to an embodiment of the present invention;
FIG. 2 is a plan view illustrating a rotary plate of FIG. 1;
FIG. 3 is a view illustrating an extraction process of the Dutch coffee extraction device according to the embodiment of the present invention;
FIG. 4 is a view illustrating a configuration of a Dutch coffee extraction device according to another embodiment of the present invention;
FIG. 5 is a view illustrating a configuration of a Dutch coffee extraction device according to a further embodiment of the present invention;
FIG. 6 is a plan view illustrating a coffee storing unit of FIG. 5; and
FIG. 7 is a view illustrating an extraction process of the Dutch coffee extraction device according to the further embodiment of the present invention.

### DESCRIPTION OF PREFERRED EMBODIMENTS

Circulation type Dutch coffee extraction devices according to preferred embodiments of the present invention will be described below in detail with reference to the accompanying drawings. Hereinafter, the detailed description of known functions or configurations will be omitted herein to make the gist of this invention clear. Throughout the entire description, the expression "a part includes a component" means that the part may further include other components unless otherwise specified. Herein, the term "Dutch coffee" means cold brew coffee that is obtained by brewing ground coffee beans in water for a lengthy period of time to endow the coffee with taste and flavor.

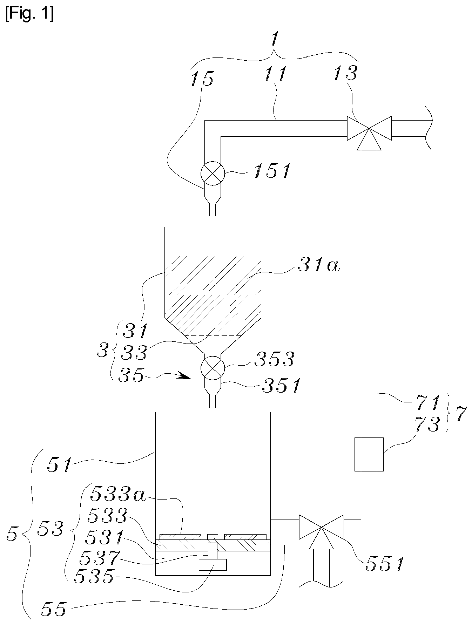

A circulation type Dutch coffee extraction device according to an embodiment of the present invention will be described with reference to FIGS. 1 to 3. The Dutch coffee extraction device includes a water supply unit 1 supplying water for extracting Dutch coffee, a coffee extraction unit 3 receiving coffee grounds 31a and extracting coffee using the water supplied from the water supply unit 1, a coffee storing unit 5 storing the coffee extracted from the coffee extraction unit 3, and a coffee circulation unit 7 circulating the extracted Dutch coffee by supplying the coffee stored in the coffee storing unit 5 through a coffee circulation pipe 71 to the coffee extraction unit 3 again.

As described above, the Dutch coffee is prepared by supplying water of room temperature or less to ground coffee and performing extraction for three hours or more. Since the Dutch coffee has unique taste and aroma as well as excellent storability, preference for Dutch coffee is increasing. However, since the Dutch coffee requires a longer extracting time and yields a small extracted amount, Dutch coffee may be more expensive than general kinds of coffee. Further, since Dutch coffee contains low caffeine, such coffee is not suitable for a person who desires to consume a high caffeine drink or who desires to enjoy various coffee tastes.

Therefore, according to the present invention, coffee that has been extracted once is circulated again to the coffee extraction unit 3 to undergo re-extraction, thus enabling highly concentrated Dutch coffee to be extracted with a simple device. The Dutch coffee extracted in this manner is a highly concentrated Dutch-coffee stock solution. By adding water or milk to the Dutch-coffee stock solution, it is possible to prepare an Americano, a latte, or various drinks using the Dutch coffee. Therefore, even if the Dutch coffee is extracted using the same amount of coffee grounds, it is possible to prepare the highly concentrated Dutch-coffee stock solution at the same cost and thereby make a larger amount of coffee drinks. Consequently, it is possible to expect the effect of reducing the price of Dutch coffee.

Further, according to the present invention, since it is possible to re-circulate and extract the Dutch coffee a desired number of times, the coffee grounds may be sufficiently utilized, thus lowering the production cost of the Dutch coffee. In addition, various tastes of Dutch coffee may be extracted depending on the number of times the Dutch coffee is extracted, so that it is possible to produce various Dutch-coffee products suiting the taste of consumers.

The water supply unit 1 is configured to supply water to the coffee extraction unit 3. The water supply unit may include a water supply pipe 11 that is provided above the coffee extraction unit 3 to supply water thereto and define a water flowing passage, a water supply valve 13 that regulates the supply of water passing through the water supply pipe 11, and a water supply nozzle 15 that is provided on an end of the water supply pipe 11 to cause water to drop to the coffee extraction unit 3 at a predetermined speed.

The water supply pipe 11 may be connected with a separate water storing tank (not shown) to be supplied with water, preferably ozone water, thus improving circulation. The water supply pipe 11 may be connected to the water supply nozzle 15 to supply water to the coffee extraction unit 3 at a predetermined speed. The coffee circulation pipe 71 may be connected to the water supply pipe 11 to supply the extracted coffee to the coffee extraction unit 3 again. The water supply pipe 11 may have the water supply valve 13 thereon to regulate the supply of water passing through the water supply pipe 11, and preferably may be provided in the form of a three-way valve at a point at which the coffee circulation pipe 71 is connected, thus regulating the supply of both water and extracted coffee to the coffee extraction unit 3. Further, as the coffee circulation pipe 71 is connected to the water supply pipe 11, water may be supplied to the coffee circulation pipe 71 when the Dutch coffee extraction device is washed, thus allowing the coffee circulation pipe 71 to be easily washed.

The water supply valve 13 is provided on the water supply pipe 11 to regulate the supply of water passing through the water supply pipe 11. Preferably, as described above, the water supply valve may be provided in the form of the three-way valve at the point at which the coffee circulation pipe 71 is connected. Therefore, the water supply valve 13 blocks a flow to the coffee circulation pipe 71 in the case of supplying water to the coffee extraction unit 3, and blocks a flow to the water storing tank (not shown) in the case of supplying extracted coffee to the coffee extraction unit 3, thus allowing water or extracted coffee to be smoothly supplied to the coffee extraction unit 3.

The water supply nozzle 15 is provided on an end of the water supply pipe 11 around the coffee extraction unit 3 to supply water or extracted coffee to the coffee extraction unit 3 at a predetermined speed. Although water passing through the water supply pipe 11 may be directly supplied to the coffee extraction unit 3 without the water supply nozzle 15, it is preferable to separately provide the water supply nozzle 15, thus allowing water or extracted coffee to be supplied at a predetermined speed. A nozzle control valve 151 may be provided on the water supply nozzle 15 to control the speed of water supplied by the water supply nozzle 15. Further, a plurality of water supply nozzles 15 may be provided to uniformly supply water or extracted coffee throughout coffee grounds stored in the coffee extraction unit 3.

The coffee extraction unit 3 receives ground coffee beans (hereinafter, referred to as 'coffee grounds'), and is supplied with water or extracted coffee from the water supply unit 1 to extract coffee from the coffee grounds 31a. The coffee extraction unit includes a grounds storing container 31 that stores the coffee grounds 31a, a filter 33 that prevents the outflow of the coffee grounds 31a, and a coffee extracting pipe 35 that discharges the extracted coffee to the coffee storing unit 5.

The grounds storing container 31 is configured to receive the coffee grounds 31a, and is provided under the water supply unit 1 so that water or coffee supplied from the water supply unit 1 is introduced and thereby coffee is extracted from the coffee grounds 31a. Further, the coffee storing unit 5 is provided under the grounds storing container to discharge extracted coffee to the coffee storing unit 5.

The filter 33 is provided at a lower position in the grounds storing container 31 to prevent the coffee grounds 31a from being discharged from the grounds storing container 31. That is, the filter allows only coffee stock solution extracted from the coffee grounds 31a to pass therethrough.

The coffee extracting pipe 35 communicates with a lower end of the grounds storing container 31 to discharge extracted coffee to the coffee storing unit 5. The coffee extracting pipe may include a coffee extraction nozzle 351 to discharge coffee, and an extraction control valve 353 to control the discharge of coffee.

The coffee storing unit 5 is configured to store coffee extracted by the coffee extraction unit 3. The coffee storing unit is provided under the coffee extraction unit 3 to store coffee discharged from the coffee extraction unit 3 and circulate coffee stored in the coffee storing unit 5 through the coffee circulation unit 7 to the coffee extraction unit 3 again. Further, the coffee storing unit 5 rotates the stored coffee and dissolves the coffee grounds 31a remaining in the coffee, thus causing only clean coffee stock solution to be extracted. To this end, the coffee storing unit 5 may include a coffee storing container 51 that stores extracted coffee, a coffee rotating means 53 that rotates coffee stored in the coffee storing container 51, and a coffee discharge pipe 55 that discharges coffee stored in the coffee storing container 51.

The coffee storing container 51 is provided under the coffee extraction unit 3 to store extracted coffee, and receives coffee discharged through the coffee extraction nozzle 351. The coffee storing container 51 may be made of various materials while having a predetermined space, and may be preferably formed in a cylindrical shape. A rotary plate 533 of the coffee rotating means 53 that will be described later is provided on a bottom of the coffee storing container 51 to rotate coffee stored in the coffee storing container 51, and the coffee discharge pipe 55 is provided on a side of the coffee storing container to discharge coffee stored in the coffee storing container 51.

The coffee rotating means 53 is configured to rotate coffee stored in the coffee storing container 51. The rotary plate 533 provided on the bottom is rotated in order to uniformly rotate coffee and efficiently dissolve the coffee grounds 31a. To this end, the coffee rotating means 53 may include a bottom support plate 531 that defines the bottom of the coffee storing container 51, the rotary plate 533 that is rotatably provided on a top of the bottom support plate 531, a rotating motor 535 that provides power to rotate the rotary plate 533, and a rotating shaft 537 that serves as a rotation center of the rotary plate 533.

The bottom support plate 531 is configured to form the bottom of the coffee storing container 51, and may preferably be formed in a circular shape. The rotary plate 533 is rotatably provided on the top of the bottom support plate 531, and the rotating motor 535 rotating the rotary plate 533 and the rotating shaft 537 connected with the rotating motor are provided in the bottom support plate 531 to allow the rotary plate 533 to be rotatable.

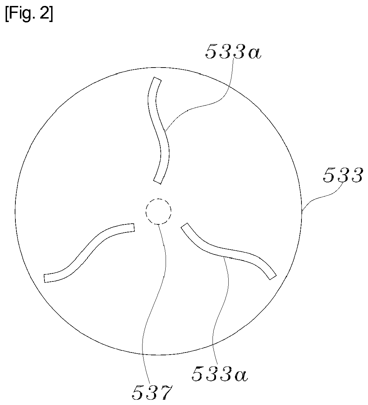

The rotary plate 533 is provided on the top of the bottom support plate 531 to rotate coffee in the coffee storing container 51, and dissolves the coffee grounds 31 a remaining in extracted coffee. The rotary plate 533 is coupled at a center thereof with the rotating shaft 537, so that the rotary plate is rotatable as the rotating shaft 537 rotates. The rotating shaft 537 is rotatably connected to the rotating motor 535. For example, as illustrated in FIG. 2, the rotary plate 533 may be formed in a circular shape, with protrusions 533a provided on the rotary plate at regular intervals.

Each protrusion 533a protrudes upwards from the rotary plate 533 to a predetermined height. The protrusions having a wave form may be spaced apart from each other at regular intervals as illustrated in FIG. 2, thus allowing coffee stored in the coffee storing container 51 to be efficiently rotated. However, the protrusion 533a may protrude upwards in various shapes without being limited to the above-described shape.

The rotating motor 535 is configured to supply power for rotating the rotary plate 533, and may be formed to be accommodated in the bottom support plate 531, thus rotating the rotating shaft 537.

The rotating shaft 537 is configured to connect the rotating motor 535 with the rotary plate 533, and is coupled to the center of the rotary plate 533 to rotate by the operation of the rotating motor 535.

The coffee discharge pipe 55 is configured to discharge coffee stored in the coffee storing container 51 to an outside of the coffee storing container 51, and may be provided to communicate with a side of the coffee storing container 51. The coffee discharge pipe 55 may be connected with a separate coffee storing tank (not shown) to store extracted coffee, and the coffee circulation pipe 71 may be connected to the coffee discharge pipe 55 to cause coffee discharged through the coffee discharge pipe 55 to be circulated to the coffee extraction unit 3. A discharge control valve 551 is formed at a junction between the coffee discharge pipe 55 and the coffee circulation pipe 71 to discharge coffee from the coffee discharge pipe 55 to the coffee storing tank or to circulate coffee through the coffee circulation pipe 71 to the coffee extraction unit 3.

The discharge control valve 551 is formed at the junction between the coffee discharge pipe 55 and the coffee circulation pipe 71 to control the discharge of coffee stored in the coffee storing container 51, and is provided in the form of a three-way valve to selectively discharge coffee to either of the coffee circulation pipe 71 or the coffee storing tank.

The coffee circulation unit 7 is configured to circulate coffee, which is extracted by the coffee extraction unit 3 and is stored in the coffee storing unit 5, to the coffee extraction unit 3 again. The coffee circulation unit introduces coffee discharged through the coffee discharge pipe 55 via the coffee circulation pipe 71 into the water supply pipe 11 and then supplies the coffee to the coffee extraction unit 3. Therefore, the coffee circulation unit 7 allows coffee to be circulated and extracted several times. Thereby, it is possible to extract highly concentrated Dutch coffee, thus reducing the price of Dutch coffee and enhancing the availability of Dutch coffee. Further, it is possible to extract coffee stock solution having various flavors by adjusting the number of circulation cycles, thus catering to consumers' diverse tastes. The coffee circulation unit 7 may include the coffee circulation pipe 71 that is connected with the coffee discharge pipe 55 to circulate coffee, and a coffee circulation pump 73 that supplies power for circulating coffee.

The coffee circulation pipe 71 is configured to provide a passage for circulating coffee stored in the coffee storing container 51 to the coffee extraction unit 3. One end of the coffee circulation pipe may be connected with the coffee discharge pipe 55, while the other end may be connected to the water supply pipe 11. As described above, the discharge control valve 551 is provided on the junction between the coffee circulation pipe 71 and the coffee discharge pipe 55 to select the discharge and circulation of coffee. Further, the water supply valve 13 is provided on a junction between the coffee circulation pipe 71 and the water supply pipe 11 to select the supply of water and coffee through the water supply pipe 11. In addition, the coffee circulation pump 73 is provided on the coffee circulation pipe 71 to circulate coffee stored in the coffee storing container 51 through the water supply pipe 11 to the coffee extraction unit 3. As described above, as the coffee circulation pipe 71 is formed to be connected to the water supply pipe 11, water flowing in the water supply pipe 11 flows into the coffee circulation pipe 71 when the Dutch coffee extraction device is washed, thus allowing the coffee circulation pipe 71 to be easily washed.

The coffee circulation pump 73 is configured to circulate coffee stored in the coffee storing container 51 through the coffee circulation pipe 71 to the coffee extraction unit 3, and is provided on the coffee circulation pipe 71. As the coffee circulation pump, a general pump for suctioning and supplying coffee may be applied.

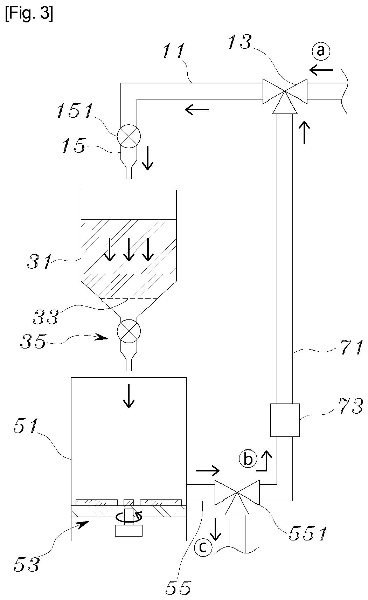

The extraction process of the Dutch coffee extraction device according to an embodiment of the present invention will be described with reference to FIG. 3. Water ⓐ supplied through a separate water storing tank (not shown) flows through the water supply valve 13 into the grounds storing container 31, and coffee is extracted from the coffee grounds 31 a and then is stored in the coffee storing container 51. Further, extracted coffee ⓑ stored in the coffee storing container 51 flows through the coffee discharge pipe 55 and the discharge control valve 551 into the coffee circulation pipe 71 for the purpose of circulation. Then, the coffee is supplied through the water supply valve 13 to the grounds storing container 31, so that coffee is re-extracted from the coffee grounds 31a. Again, the coffee stored in the coffee storing container 51 may be selectively re-circulated or discharged by the discharge control valve 551. In the case of selecting the discharge, coffee ⓒ is discharged through the discharge control valve 551 to the separate coffee storing tank (not shown) and then is finally stored.

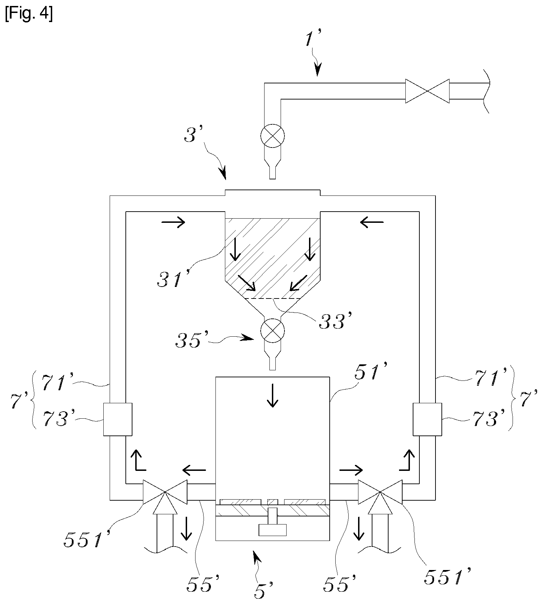

A circulation type Dutch coffee extraction device according to another embodiment of the present invention will be described with reference to FIG. 4. Similarly to the preceding embodiment, the Dutch coffee extraction device includes a water supply unit 1', a coffee extraction unit 3', a coffee storing unit 5', and a coffee circulation unit 7'. However, according to this embodiment, a coffee circulation pipe 71' of the coffee circulation unit 7' is not connected to the water supply pipe 11' but is connected to a sidewall of the grounds storing container 31'. Therefore, such a difference between the embodiments will be described below.

As in the preceding embodiment, one end of the coffee circulation pipe 71' is connected to the coffee discharge pipe 55', and the discharge or the circulation is selected by the discharge control valve 551'. However, the other end is connected to the sidewall of an upper portion of the grounds storing container 31'. Thus, as illustrated in FIG. 4, coffee circulated through the coffee circulation pipe 71' may flow along the sidewall of the grounds storing container 31'. Since water supplied initially through the water supply pipe 11' is usually supplied to the center of the grounds storing container 31', coffee grounds located at a peripheral surface of the grounds storing container 31' may be less contacted with water than coffee grounds located at the center. Thus, if coffee is circulated through the water supply pipe 11' as in the preceding embodiment, the coffee grounds located at the side surface of the grounds storing container 31' may not be continuously extracted. Therefore, this embodiment causes coffee circulated through the coffee circulation pipe 71' to be introduced through the sidewall of the grounds storing container 31' and flow along the sidewall. As a result, it is possible to efficiently utilize coffee grounds and enhance the efficiency of concentrating coffee, thus allowing highly concentrated coffee to be extracted within a shorter time.

Further, the coffee circulation pipes 71' are formed on both sides of the coffee storing container 51' and the grounds storing container 31' to allow the coffee grounds 31a' held in the grounds storing container 31' to be more efficiently extracted. The coffee circulation pipe may be formed in various numbers without being limited thereto. As such, in the case of forming a plurality of coffee circulation pipes 71', a plurality of coffee discharge pipes 55' or discharge control valves 551' may be likewise formed.

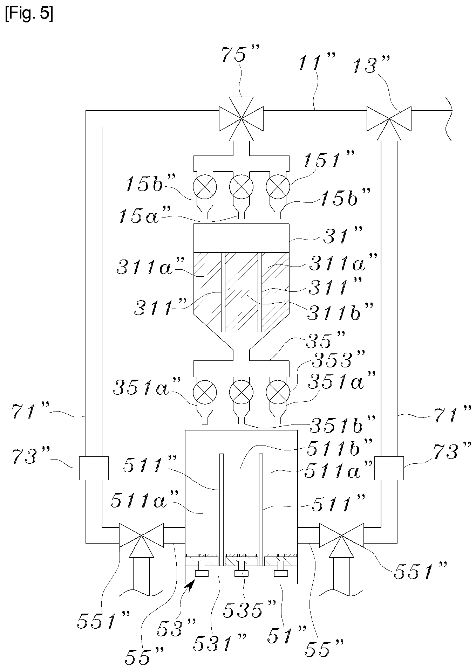

A circulation type Dutch coffee extraction device according to a further embodiment of the present invention will be described with reference to FIGS. 5 to 7. Similarly to the preceding embodiment, the Dutch coffee extraction device includes a water supply unit 1", a coffee extraction unit 3", a coffee storing unit 5", and a coffee circulation unit 7". However, according to this embodiment, the Dutch coffee extraction device is configured such that each of a grounds storing container 31" and a coffee storing container 51" is partitioned into a plurality of regions and the extraction, storage and circulation of coffee are performed in respective regions. Likewise, a plurality of water supply nozzles 15" and coffee extraction nozzles 351" may be provided such that the supply of water and the extraction of coffee are performed in respective regions.

Therefore, the Dutch coffee extraction device according to this embodiment is configured such that the grounds storing container 31" is divided into a plurality of regions and water or coffee is supplied to respective regions, thus allowing coffee grounds to be more efficiently used and enabling highly concentrated Dutch coffee to be extracted. Further, the coffee storing container 51" is divided into a plurality of regions, so that coffee is divided into doses corresponding to the number of extractions. Thus, such a configuration allows Dutch coffee to be more easily and rapidly extracted and circulated.

The plurality of water supply nozzles 15" may be provided on an end of the water supply pipe 11". For example, three water supply nozzles may be provided. Thus, each water supply nozzle 15" supplies water or coffee to an associated region of the grounds storing container 31", and each water supply nozzle 15" is provided with a nozzle control valve 151" to control the supply of water or coffee to each region and a supply speed.

The grounds storing container 31" of the coffee extraction unit 3" may be partitioned into a plurality of regions, e.g. three regions by partition plates 311". Among the three regions, a middle region may be set as a raw-water passing region 311 a" through which water passes, and opposite regions may be set as coffee passing regions 311b". Thus, water supplied through a water storing tank (not shown) flows through a middle water supply nozzle 15a" into the raw-water passing region 311a", and coffee circulated through the coffee circulation pipe 71" flows through the water supply nozzles 15b" located at opposite sides into the coffee passing regions 311b". Thereby, the circulated coffee is in contact with coffee grounds that are not in contact with water, thus extracting coffee and thereby allowing coffee grounds to be uniformly used and enabling highly concentrated coffee to be efficiently extracted. However, according to this embodiment, the grounds storing container is divided into the raw-water passing region 311a" and the coffee passing region 311b", for example. However, without being limited to this example, the grounds storing container may be divided into several regions according to the number of extractions, and the number of regions may be adjusted, thus allowing highly concentrated coffee to be efficiently extracted.

A plurality of coffee extraction nozzles 351", for example, three coffee extraction nozzles may be formed on the coffee extracting pipe 35", thus discharging extracted coffee to each region of the coffee storing container 51". Therefore, primarily extracted coffee, secondarily extracted coffee and the like may be discharged depending on the respective regions of the coffee storing container 51", and an extraction control valve 353" may be formed on each coffee extraction nozzle 351" to control the discharge of coffee passing through the coffee extraction nozzle 351".

The coffee storing container 51" of the coffee storing unit 5" may be partitioned into a plurality of regions, e.g. three regions by partition plates 511". According to this embodiment, opposite side of the coffee storing container 51" may be set as primary coffee extracting regions 511a", and a region between the primary coffee extracting regions 511a" may be set as a secondary coffee extracting region 511b". Coffee passing through the raw-water passing region 311a" of the grounds storing container 31" is introduced into the opposite primary coffee extracting regions 511a" to be circulated to the coffee extraction unit 3" again. Coffee passing through the coffee passing region 311b" of the grounds storing container 31" may be introduced into the middle secondary coffee extracting region 511b" to be re-circulated or discharged. Thus, each region of the coffee storing container 51" may be set as a storing region depending on the circulation number of coffee, thus allowing coffee to be rapidly and easily discharged and circulated. In other words, the primary coffee extracting region 511 a" is opened towards the coffee circulation pipe 71" by the discharge control valve 551" to circulate coffee, and the secondary coffee extracting region 511b" is opened towards the coffee storing tank (not shown) by the discharge control valve 551", thus continuously discharging coffee and thereby allowing the extraction device to be easily controlled. Since the coffee storing container 51" is divided into several regions to store coffee, the following operation can be rapidly performed even when coffee circulated different numbers of times is stored in the coffee storing container 51".

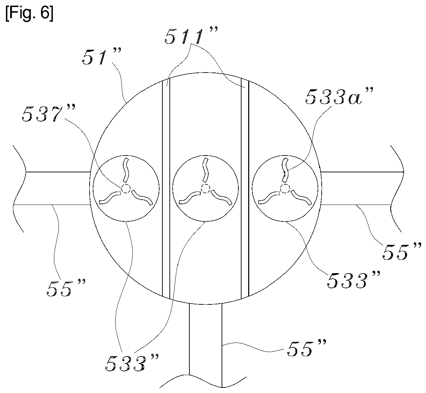

Since the coffee storing container 51" is partitioned into a plurality of regions, the rotary plate 533" of the coffee rotating means 53" may be provided for each region. Thus, as illustrated in FIG. 6, the rotary plate 533" is rotatably provided in a center of each region, and the rotating motor 535" is connected to each rotary plate 533" to rotate received coffee.

The coffee discharge pipe 55" is provided to communicate with a side of each region of the coffee storing container 51", and the discharge control valve 551" is formed on each coffee discharge pipe 55" to select the circulation or discharge of coffee contained in each region. Thus, respective regions of the coffee storing container 51" may be set as regions containing different kinds of coffee in some situations. Further, the coffee circulation pipe 71" is connected to the coffee discharge pipe 55" to circulate coffee contained in each region to the coffee extraction unit 3".

The coffee circulation pipe 71" of the coffee circulation unit 7" is connected to the coffee discharge pipe 55" that is connected with each region of the coffee storing container 51", and is connected with the water supply pipe 11" such that coffee circulated from each region of the coffee storing container 51" is supplied to the coffee extraction unit 3", with a coffee circulation pump 73" being provided on each coffee circulation pipe 71". Further, the coffee circulation pipe 71" connected with the three regions of the coffee storing container 51" is smoothly connected with the water supply pipe 11", and a coffee circulation control valve 75" connected with each coffee circulation pipe 71" is provided above the coffee extraction unit 3" to smoothly supply coffee passing through each coffee circulation pipe 71" to the coffee extraction unit 3".

The coffee circulation control valve 75" is provided above the coffee extraction unit 3" to be connected with the water supply pipe 11" and each coffee circulation pipe 71 ", and may be preferably provided in the form of a four-way valve. As in the preceding example, if the coffee storing container 51" has three regions, three coffee discharge pipes 55" may be formed to be connected to the respective regions. Likewise, three coffee circulation pipes 71" may be formed to be connected with the coffee discharge pipes 55". One of the three coffee circulation pipes 71" may be connected with the water supply pipe 11" as in the preceding embodiment. Thus, the water supply pipe 11" extending from the water storing tank (not shown), two coffee circulation pipes 71", and the water supply pipe 11" connected with the coffee extraction unit 3" may be connected to the coffee circulation control valve 75". Therefore, the coffee circulation control valve 75" may selectively supply coffee or water coming from the coffee circulation pipe 71" or the water supply pipe 11" to the coffee extraction unit 3". However, the connecting relationship between the coffee circulation control valve 75" and the respective pipes may be variously changed in number and shape without being limited to the above-described relationship.

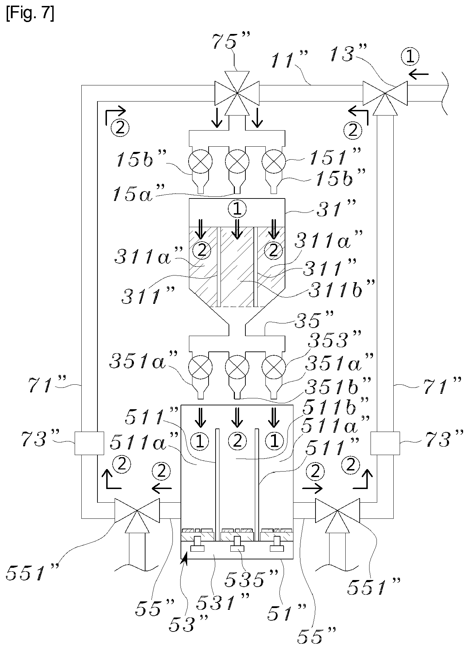

The extraction process of the circulation type Dutch coffee extraction device according to the further embodiment of the present invention will be described with reference to FIG. 7. Water ① supplied from the water storing tank (not shown) flows through the water supply valve 13" and the coffee circulation control valve 75" to the water supply nozzle 15", and only the water supply nozzle 15a" facing the raw-water passing region 311a" of the grounds storing container 31" is opened to supply water ① to the raw-water passing region 311a". Further, water ① passing through the raw-water passing region 311a" is supplied to the primary coffee extracting region 511 a" through the coffee extraction nozzle 351a" facing the primary coffee extracting region 511a" of the coffee storing container 51". Further, coffee ② discharged from the primary coffee extracting region 511a" flows through each coffee discharge pipe 55" into the coffee circulation pipe 71", and is supplied through the coffee circulation control valve 75" to the grounds storing container 31" again. In this case, only the opposite water supply nozzles 15" facing the coffee passing region 311b" are opened so that the circulated coffee ② is introduced into the coffee passing regions 311b". Thus, it is possible to more efficiently use coffee grounds and extract highly concentrated coffee. The coffee ② passing through the coffee passing region 311b" is discharged through the middle coffee extraction nozzle 351b" to the secondary coffee extracting region 511b" and then is stored. The coffee stored in the secondary coffee extracting region 511b" may be discharged through the discharge control valve 551" to the separate coffee storing tank (not shown) or may be re-circulated through the coffee circulation pipe 71". However, as described above, the number and function of the divided regions of the grounds storing container 31" and the coffee storing container 51" may be efficiently regulated according to the kind of coffee that is to be extracted.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A circulation type Dutch coffee extraction device, comprising:
a water supply unit supplying water for extracting Dutch coffee;
a coffee extraction unit receiving coffee grounds, and extracting coffee using the water supplied from the water supply unit;
a coffee storing unit storing the coffee extracted from the coffee extraction unit; and
a coffee circulation unit circulating the extracted Dutch coffee by supplying the coffee stored in the coffee storing unit through a coffee circulation pipe to the coffee extraction unit again,
whereby the device is capable of extracting highly concentrated Dutch coffee.

2. The circulation type Dutch coffee extraction device of claim 1, wherein the coffee circulation pipe is connected at a first end thereof to the coffee storing unit, and is connected at a second end thereof to the water supply unit.

3. The circulation type Dutch coffee extraction device of claim 2, wherein the water supply unit comprises a water supply pipe supplying water for extracting the Dutch coffee to a portion above the coffee extraction unit, and a water supply valve provided on the water supply pipe to regulate a supply of the water through the water supply pipe, the water supply valve is provided in a form of a three-way valve at a point to which the coffee circulation pipe is connected.

4. The circulation type Dutch coffee extraction device of claim 1, wherein the coffee storing unit comprises a coffee storing container storing the coffee extracted by the coffee extraction unit, and coffee rotating means rotating the coffee stored in the coffee storing container.

5. The circulation type Dutch coffee extraction device of claim 4, wherein the coffee rotating means comprises:
a bottom support plate forming a bottom of the coffee storing container; and
a rotary plate rotatably provided on an upper portion of the bottom support plate.

6. The circulation type Dutch coffee extraction device of claim 5, wherein the rotary plate comprises a plurality of protrusions that protrude upwards while being spaced apart from each other at a predetermined interval.

7. The circulation type Dutch coffee extraction device of claim 1, wherein the coffee circulation pipe is connected at a first end thereof to the coffee storing unit, and is connected at a second end thereof to a sidewall of the coffee extraction unit.
